# FASCICULE DE BREVET EUROPEEN

(11) **EP 0 660 997 B1**
(45) Date de publication et mention de la délivrance du brevet: **24.03.1999**
(21) Numéro de dépôt: 94403037.8
(22) Date de dépôt: 27.12.1994
(51) Int. Cl.: A01F 29/00

(54) **Machine distributrice de fourrage, ensilage ou autre**
Futter- oder Silageverteilmaschine
Forage or silage distributor

(30) Priorité: 31.12.1993 FR 9315978
(43) Date de publication de la demande: 05.07.1995
(73) Titulaire: JEANTIL S.A., F-35590 l'Hermitage (FR)
(72) Inventeur: Jeantil, Robert, F-35310 Mordelles (FR); Jeantil, Philippe, F-35310 Mordelles (FR); Jeantil, Patrick, F-35760 Saint-Gregoire (FR)
(74) Mandataire: Obolensky, Michel

(56) Documents cités:
- EP-A- 0 172 084
- FR-A- 2 563 687
- FR-A- 2 585 535

## Description

La présente invention est relative aux matériels d'élevage, tels que désileuses, pailleuses, mélangeuses ou autres.

Ces machines comportent généralement une caisse sur laquelle est articulée une griffe destinée à permettre à la fois le chargement de la caisse par sa partie arrière et la fermeture de celle-ci une fois qu'elle est chargée, un fond mobile de déplacement des produits contenus dans la caisse vers l'avant de celle-ci et un dispositif de démêlage des produits contenus dans la caisse qui se présentent par exemple sous forme d'ensilage, de balles rondes ou parallélèpipédiques, de paille, de foin ou analogues.

Les dispositifs de démêlage utilisés jusqu'à présent dans de telles machines, sont des dispositifs de démêlage à cylindres rotatifs munis de doigts de démêlage, des dispositifs de démêlage à convoyeurs à éléments d'entraînement sans fin munis de doigts d'entraînement des brins du produit à distribuer, et des dispositifs démêleurs à turbines à doigts démêleurs et pales.

On connaît également, par le document FR-A-2 563 687, une machine distributrice de fourrage comportant une caisse de réception de produits à distribuer, des convoyeurs superposés de démêlage des produits et un convoyeur transversal de distribution des produits démêlés. Le convoyeur transversal est disposé sous les extrémités aval des deux convoyeurs superposés et de manière que le produit démêlé par ces derniers tombe sur le convoyeur pour être distribué.

La présente invention vise à améliorer le rendement de telles machines et à créer une machine qui soit capable d'assurer la distribution de produits de désilage avec un débit accru et des brins longs par rapport à celui que sont capables de délivrer les machines connues.

Elle a donc pour objet une machine distributrice de fourrage, ensilage ou autres, comportant une caisse de réception de produits à distribuer, un fond mouvant et un dispositif de démêlage et de distribution du produit, comportant au moins un convoyeur à éléments d'entraînement sans fin munis de doigts d'entraînement des brins du produit, le convoyeur étant disposé de façon inclinée vers le haut à partir du fond mobile, caractérisé en ce que le dispositif de démêlage et de distribution comporte en outre une turbine à pales longues de création d'un courant d'aspiration de l'intérieur de la caisse vers la sortie de celle-ci, et des moyens de guidage de l'air et des brins de produit démêlés aspirés par la turbine.

L'invention sera mieux comprise à la lecture de la description qui va suivre, donnée uniquement à titre d'exemple et faite en se référant aux dessins annexés, sur lesquels :
- la Fig.1 est une vue schématique en coupe partielle d'une machine désileuse suivant l'invention;
- la Fig.2 est une vue analogue à celle de la figure 1 d'un autre mode de réalisation de la machine suivant l'invention; et
- la Fig.3 est une vue partielle plus détaillée d'un type de convoyeur équipant la machine suivant l'invention.

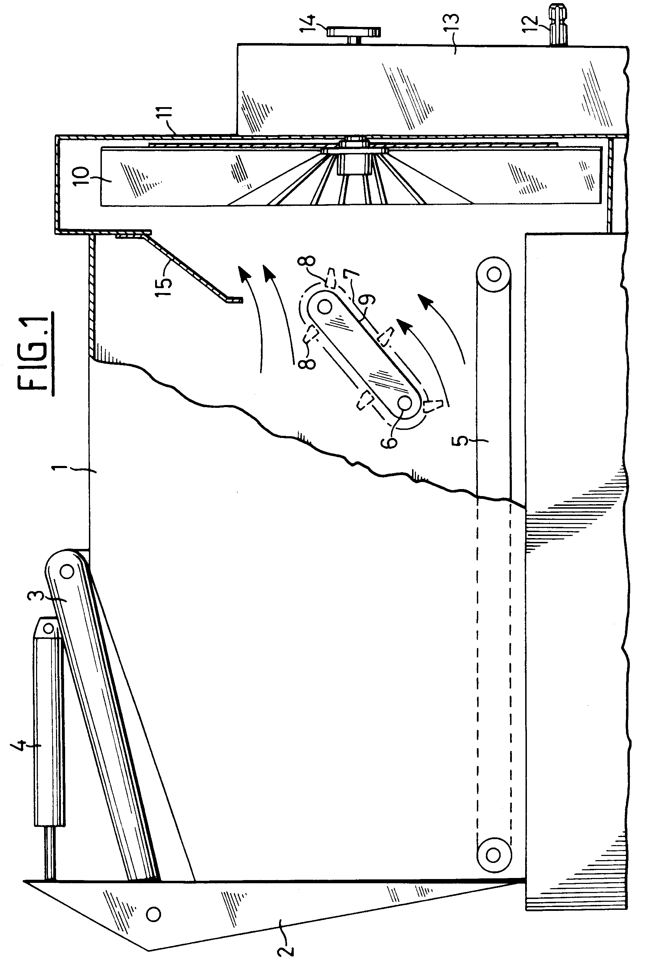

La machine représentée à la figure 1 est par exemple une désileuse. Elle comporte une caisse 1 équipée d'une griffe 2 de préhension et de chargement dans la caisse de produits sous forme d'ensilage, de balles cylindriques, parallélépipédiques ou autres.

La griffe 2 est articulée sur la caisse par des bras 3 actionnés par des vérins 4.

Cette griffe sert également de porte arrière pour la caisse.

Dans la caisse est en outre monté un fond mobile 5 de type connu qui se déplace longitudinalement pour amener l'ensilage vers la partie avant de la caisse.

La machine comporte de plus un dispositif de démélage et de distribution qui, suivant l'invention, comporte un convoyeur sans fin 6 comportant des éléments d'entraînement sans fin tels que des chaînes 7 munies de doigts 8 d'entraînement des brins de l'ensilage.

Un tel convoyeur est par exemple décrit au document FR-A-2 563 687 et dont les doigts d'entraînement des brins sont disposés à intervalles réguliers sur des barrettes transersales fixées aux chaînes d'entraînement sans fin.

De façon avantageuse, le convoyeur 6 comporte un carter de carénage en tôle 9.

Le convoyeur sans fin 6 est disposé de façon inclinée vers le haut à partir du fond mobile 5.

Son extrémité opposée au fond mobile 5 se trouve en regard d'une turbine 10 d'aspiration et d'éjection des produits démêlés par le convoyeur 6. Cette turbine est disposée dans une volute 11 prévue à l'extrémité de la caisse 1 opposée à la griffe 2 et entraînée par un arbre 12 destiné à être relié à une prise de force d'un tracteur non représenté, par l'intermédiaire d'une boîte de vitesses 13 pourvue d'un levier 14 de changement de rapport.

Dans le présent mode de réalisation, au-dessus du convoyeur est disposée une hotte 15 de guidage du courant d'aspiration d'air engendré latéralement par la rotation de la turbine 10.

Le convoyeur 6, et en particulier son carénage 9 participe également au guidage de l'air aspiré hors de la caisse par la turbine 10 selon les flèches représentées à la figure 1.

L'air aspiré hors de la caisse passe essentiellement entre le fond mobile 5 et le bas du convoyeur 6 et entre le convoyeur 6 et la hotte 15.

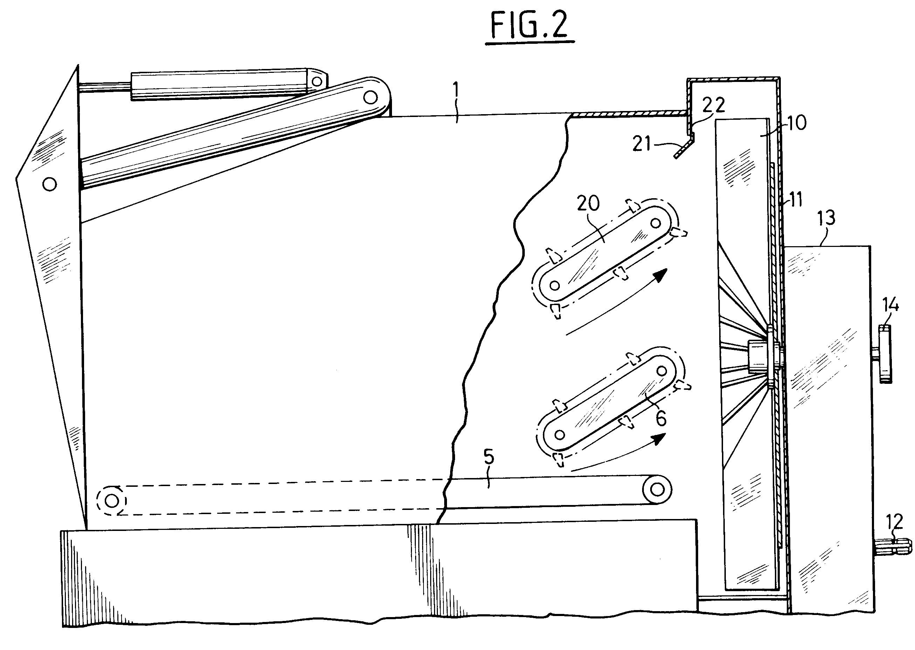

La machine représentée à la figure 2 est semblable à celle de la figure 1 à l'exception du fait qu'à la place de la hotte 15 elle comporte deux convoyeurs dont l'un est identique au convoyeur 6 de la figure 1 et porte donc le même numéro de référence que celui-ci, tandis que l'autre convoyeur 20 est disposé au-dessus du convoyeur 6 à peu près à l'emplacement de la hotte 15 pour assurer en combinaison avec le premier convoyeur 6, un démêlage plus efficace des brins de l'ensilage contenu dans la caisse 1, mais également pour participer au guidage de l'air aspiré par la turbine hors de la caisse 1 vers la volute 11 et la sortie de celle-ci.

Le fait que les premier et second convoyeurs 6 et 20 comportent tous deux des carters ou carénages, ils sont particulièrement efficaces pour assurer le guidage de l'air extrait par la turbine 10 hors de la caisse 1 selon les flèches indiquées sur la figure 2.

L'extrémité supérieure du convoyeur supérieur 20 est disposée à proximité d'un becquet 21 de guidage de l'air et des brins de produit démêlés, faisant saillie à partir de la paroi intérieure 22 de la volute 11.

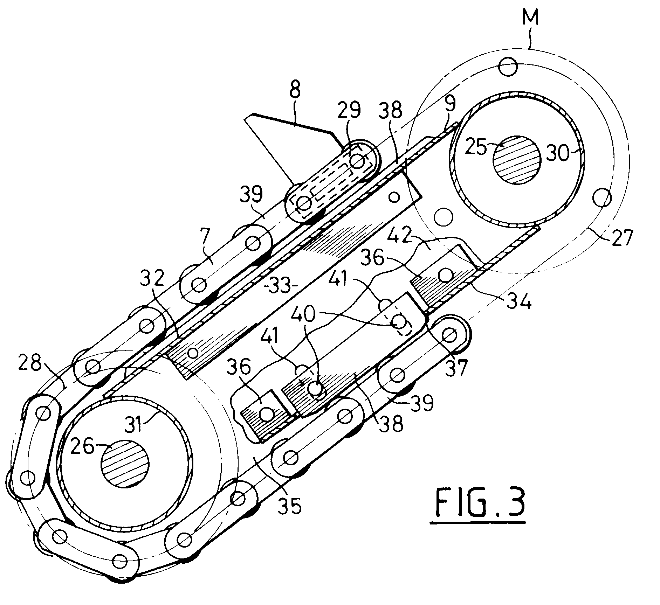

Selon un mode de réalisation particulier, les convoyeurs utilisés dans la machine suivant l'invention peuvent être du type qui va maintenant être décrit en référence à la Fig.3.

Le convoyeur de démêlage représenté à la Fig.3 comporte principalement des arbres rotatifs 25,26 portant respectivement à leurs deux extrémités des pignons 27,28 sur lesquels passent des chaînes telles que la chaîne 7 qui forment des éléments d'entraînement sans fin de doigts 8 d'entraînement de brins de fourrage ou analogues portés par des barrettes transversales 29.

L'arbre 25 qui est l'arbre menant du convoyeur est entraîné en rotation par un moteur hydraulique M.

Le convoyeur comporte en outre un carter de carénage 9 logé dans l'espace inférieur aux chaînes 7 et comprenant deux tubes 30,31 respectivement coaxiaux aux arbres 25 et 26 et solidaires en rotation de ceux-ci, et auxquels sont associées une plaque de carénage supérieure 32 disposée de façon tangente aux tubes 25 et 26 et pourvue d'un rebord 33 de fixation à une paroi non représentée du dispositif de démêlage équipé du convoyeur et une plaque de carénage inférieure 34 disposée de façon tangente à l'un des tubes 25 et ménageant avec l'autre tube 26, un espace 35 d'évacuation de résidus qui sont susceptibles de pénétrer par les interstices qui subsistent entre les tubes 30 et 31 et la plaque supérieure 32.

La plaque de carénage inférieure 34 comporte elle aussi des pattes 36 de fixation à une paroi latérale du dispositif de démêlage.

Dans cette plaque inférieure 34, est ménagée une lumière 37 dans laquelle est monté de façon réglable en position, un patin 38 de tension du brin inférieur mou 39 de chaque chaîne 7 et dont le réglage en position est assuré par des vis 40 coopérant avec des lumières 41 ménagées dans la paroi latérale du dispositif de démêlage dont une portion représentée en arrachement est désignée par la référence 42.

Le carter de carénage 9 formé par les tubes 30 et 31 et par les plaques 32 et 34 assure d'une part, la protection du mécanisme contre la pénétration de brins longs dans les parties tournantes du convoyeur, mais sert également comme indiqué plus haut à canaliser l'air et les produits démêlés aspirés par la turbine 10.

Grâce à l'efficacité conjuguée du démêlage obtenu à l'aide d'un ou deux convoyeurs sans fin et à l'aspiration améliorée par la présence de la turbine 10 à pales longues, on obtient une machine qui délivre du fourrage, de l'ensilage ou d'autres produits avec une régularité et un débit accru par rapport à ceux que l'on peut obtenir avec les machines classiques.

## Revendications

1. Machine distributrice de fourrage, ensilage ou autres, comportant une caisse (1) de réception de produits à distribuer, un fond (5) mouvant et un dispositif de démêlage et de distribution du produit comportant au moins un convoyeur (6) à éléments d'entraînement sans fin (7) munis de doigts (8) d'entraînement des brins du produit, le convoyeur étant disposé de façon inclinée vers le haut à partir du fond mobile, caractérisé en ce que le dispositif de démêlage et ce distribution comporte en outre une turbine (10) à pales longues de création d'un courant d'aspiration de l'intérieur de la caisse vers la sortie de celle-ci, et des moyens (15;21) de guidage de l'air et des brins de produit démêlés aspirés par la turbine (10).

2. Machine suivant la revendication 1, caractérisée en ce que le convoyeur (6;20) comporte un carter (9) autour duquel se déplacent les éléments d'entraînement sans fin et qui contribue au guidage de l'air aspiré et des produits démêlés hors de la caisse (1) de la machine par ladite turbine (10).

3. Machine suivant l'une des revendications 1 et 2, caractérisée en ce qu'elle comprend un convoyeur (6) et en ce que les moyens de guidage de l'air et des brins de produit démêlés aspirés par la turbine (10) comprennent une hotte (15).

4. Machine suivant l'une des revendications 1 et 2, caractérisée en ce qu'elle comporte deux convoyeurs (6;20) disposés l'un au-desus de l'autre en position inclinée entre le fond mobile (5) de la machine et la turbine (10), lesdits convoyeurs comprenant des carters (9) assurant le guidage de l'air et du produit démêlé par la coopération des deux convoyeurs, aspiré par la turbine (10).

5. Machine suivant la revendication 4, caractérisée en ce que les moyens de guidage de l'air et des brins de produit démêlés aspirés par la turbine (10) comportent un becquet (21) disposé à proximité de l'extrémité supérieure du convoyeur supérieur (20).

## Claims

1. Machine for distributing fodder, silage or the like, comprising a box (1) for receiving the products to be distributed, a moving base (5) and a device for disentangling and distributing the product, comprising at least one conveyor (6) having endless drive elements (7) provided with pawls (8) for driving the strands of product, the conveyor being arranged so as to slope upwards from the mobile base, characterised in that the disentangling and distributing device further comprises a turbine (10) with long blades for creating a suction current inside the box towards the outlet thereof, and means (15;21) for guiding the air and the disentangled strands of product sucked in by the turbine (10).

2. Machine according to claim 1, characterised in that the conveyor (6; 20) comprises a casing (9) around which the endless drive elements move and which helps to guide the aspirated air and the disentangled products out of the box (1) of the machine by said turbine (10).

3. Machine according to one of claims 1 and 2, characterised in that it comprises a conveyor (6) and in that the means for guiding the air and the disentangled strands of product aspirated by the turbine (10) comprise a hopper (15).

4. Machine according to one of claims 1 and 2, characterised in that it comprises two conveyors (6; 20) arranged one above the other in an inclined position between the mobile base (5) of the machine and the turbine (10), said conveyors comprising casings (9) which ensure guiding of the air and the product disentangled by the co-operation of the two conveyors, aspirated by the turbine (10).

5. Machine according to claim 4, characterised in that the means for guiding the air and the disentangled strands of product aspirated by the turbine (10) comprise a spoiler (21) located close to the upper end of the upper conveyor (20).

## Patentansprüche

1. Maschine zum Verteilen von Futter, Silage oder dergleichen, aufweisend ein Gehäuse (1) zur Aufnahme von zu verteilenden Erzeugnissen, eine bewegliche Unterlage (5) und eine Vorrichtung zum Auflockern und Verteilen des Erzeugnisses mit zumindest einem Förderer (6) mit Endlosmitnahmeelementen (7), die mit Fingern (8) zur Mitnahme von Stückchen des Erzeugnisses versehen sind, wobei der Förderer ausgehend von der beweglichen Unterlage nach oben geneigt angeordnet ist, dadurch gekennzeichnet, daß die Auflockerungs- und Verteilungsvorrichtung außerdem eine Turbine (10) mit langen Flügeln zur Erzeugung eines Ansaugstroms im Innern des Gehäuses in Richtung auf dessen Auslaß sowie Mittel (15; 21) zur Führung der Luft und der Stückchen des Erzeugnisses umfaßt, welche durch die Turbine (10) angesaugt sind.

2. Maschine nach Anspruch 1, dadurch gekennzeichnet, daß der Förderer (6, 20) eine Wanne (9) umfaßt, um welche herum sich die Endlosmitnahmeelemente bewegen, und welche zur Führung der angesaugten Luft und der aufgelockerten Erzeugnisse aus dem Gehäuse (1) der Maschine durch die Turbine (10) beitragt.

3. Maschine nach einem der Ansprüche 1 und 2, dadurch gekennzeichnet, daß sie einen Förderer (6) umfaßt, und daß die Mittel zur Führung der Luft und der durch die Turbine (10) angesaugten aufgelockerten Erzeugnisstückchen einen Abzug (15) umfassen.

4. Maschine nach einem der Ansprüche 1 und 2, dadurch gekennzeichnet, daß sie zwei Förderer (6, 20) umfaßt, die übereinander in geneigter Position zwischen der beweglichen Unterlage (5) der Maschine und der Turbine (10) angeordnet sind, wobei die Förderer Rutschen (9) umfassen, welche die Führung der Luft und des aufgelockerten Erzeugnisses durch Zusammenwirken der zwei Förderer angesaugt durch die Turbine (10) sicherstellen.

5. Maschine nach Anspruch 4, dadurch gekennzeichnet, daß die Mittel zur Führung der Luft und der durch die Turbine (10) angesaugten aufgelockerten Erzeugnisstückchen einen Spoiler (21) umfassen, der im Bereich des oberen Endes des oberen Förderers (20) angeordnet ist.
